(19) Europäisches Patentamt
European Patent Office
Office européen des brevets

(11) **EP 3 256 824 B1**

(12) **EUROPÄISCHE PATENTSCHRIFT**

(45) Veröffentlichungstag und Bekanntmachung des Hinweises auf die Patenterteilung:
**05.05.2021  Patentblatt 2021/18**

(21) Anmeldenummer: **16702511.3**

(22) Anmeldetag: **27.01.2016**

(51) Int Cl.:
*G01F 23/284* (2006.01)          *H01Q 1/22* (2006.01)
*H01Q 13/02* (2006.01)

(86) Internationale Anmeldenummer:
**PCT/EP2016/051679**

(87) Internationale Veröffentlichungsnummer:
**WO 2016/128216 (18.08.2016 Gazette 2016/33)**

(54) **VORRICHTUNG MIT ZWEI KOPPELELEMENTEN ZUR ERMITTLUNG UND ÜBERWACHUNG EINES FÜLLSTANDS**

DEVICE HAVING TWO COUPLING ELEMENTS FOR DETERMINING AND MONITORING A FILL LEVEL

DISPOSITIF À DEUX ELEMENTS DE COUPLAGE POUR DÉTERMINER ET SURVEILLER UN NIVEAU DE REMPLISSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.02.2015  DE 102015102002**

(43) Veröffentlichungstag der Anmeldung:
**20.12.2017  Patentblatt 2017/51**

(73) Patentinhaber: **Endress+Hauser SE+Co. KG**
**79689 Maulburg (DE)**

(72) Erfinder: **BLÖDT, Thomas**
**79585 Steinen (CH)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
**US-A- 4 503 433          US-A1- 2009 289 835**
**US-A1- 2012 137 768**

**Beschreibung**

Die Erfindung betrifft eine Vorrichtung zum Aussenden und Empfangen von elektromagnetischen Wellen (EM-Wellen) zur Ermittlung und Überwachung eines Füllstands eines Mediums in einem Behälter mittels Laufzeiten der EM-Wellen.

Herkömmliche Pulsradar-Füllstandsmessgeräte weisen regelmäßig eine Sendeeinrichtung mit einer an eine Steuerung angeschlossenen Pulserzeugungseinrichtung auf. Die Pulserzeugungseinrichtung erzeugt für jede Messung ein Sendesignal, welches aus Mikrowellenpulsen einer fest vorgegebenen Mittenfrequenz besteht und eine vorgegebene Pulswiederholrate aufweist. Die Mikrowellenimpulse weisen beispielsweise fest vorgegebene Mittenfrequenzen von 26 GHz oder 78 GHz auf. Die Antenne ist oberhalb des höchsten zu messenden Füllstands am Behälter montiert, in Richtung des Füllguts ausgerichtet und sendet die Sendesignale in den Behälter. Nachfolgend empfängt die Antenne die an dem Füllgut in Richtung des Füllstandsmessgeräts zurück reflektierten Signalanteile nach einer von der Entfernung des Füllguts abhängigen Laufzeit als Empfangssignale. Letztere werden einer an die Sendeeinrichtung und die Antenne angeschlossenen Signalverarbeitungseinrichtung zugeführt, die anhand der Empfangssignale den Füllstand bestimmt.

Dabei werden regelmäßig Messkurven abgeleitet, die die Amplituden der Empfangssignale als Funktion von deren für den Weg zum Füllgut und zurück benötigten Laufzeit wiedergeben. Aus den Laufzeiten der Maxima dieser Messkurven kann nun anhand der Ausbreitungsgeschwindigkeit der Mikrowellenpulse die Entfernung des Füllguts vom Füllstandsmessgerät bestimmt werden.

Zur Füllstandsmessung werden heute eine Vielzahl unterschiedlicher häufig als Echoerkennungsverfahren bezeichnete Auswertungsverfahren eingesetzt, mit denen anhand der Messkurven das jeweils darin enthaltene auf die Reflektion an der Füllgutoberfläche zurückzuführende Maximum ermittelt wird. Dabei kann beispielsweise das erste auftretende Maximum oder das die größte Maximalamplitude aufweisende Maximum als das gesuchte auf die Reflektion an der Füllgutoberfläche zurückzuführende Maximum der jeweiligen Messkurve bestimmt werden. Aus der Laufzeit dieses Maximums wird anhand der Ausbreitungsgeschwindigkeit der Mikrowellenpulse die Entfernung der Füllgutoberfläche vom Füllstandsmessgerät abgeleitet, die dann anhand der Einbauhöhe der Antenne in den Füllstand - also die Füllhöhe des Füllguts im Behälter - umrechenbar ist.

Diese Füllstandsmessgeräte liefern in einer Vielzahl unterschiedlicher Anwendungen zuverlässige Messergebnisse. Zur Füllstandsmessung von Schüttgütern sind sie jedoch in der Regel nicht optimal geeignet, da Schüttgüter regelmäßig berg- oder talförmige Schüttkegel ausbilden, deren Oberflächenprofil mit diesen Füllstandsmessgeräten nicht erfasst und somit bei der Füllstandsbestimmung nicht berücksichtigt werden kann.

Ebenfalls unter Umständen problematisch ist der Einsatz herkömmlicher Füllstandsmessgeräte mit einer einzigen starr montierten Antenne in Anwendungen, in denen im Behälter seitlich in den Strahlengang der Sendesignale hineinragende, nachfolgend als Störer bezeichnete Einbauten, wie z.B. weitere Messgeräte oder Befüllstutzen, vorhanden sind.

DE 102012109101 A1 beschreibt ein Füllstandsmessgerät zur Messung eines Füllstands eines Füllguts in einem Behälter. Das Füllstandsmessgerät weist eine Antenne auf, die Sendesignale mit verschiedenen Mittenfrequenzen in den Behälter sendet, und deren im Behälter in Richtung der Antenne zurück reflektierten Signalanteile als Empfangssignale empfängt. Ferner weist die Antenne eine von der Mittenfrequenz der Sendesignale abhängige für unterschiedliche Mittenfrequenzen verschiedene räumliche Abstrahlcharakteristik auf. Eine Signalverarbeitungseinrichtung wertet die Empfangssignale anhand der Mittenfrequenzen der Mikrowellenpulse der zugehörigen Sendesignale und der Mittenfrequenzabhängigkeit der räumlichen Abstrahlcharakteristik der Antenne aus

US 2009/289835 A1 und US 2012/137768 A1 offenbaren Radar-basierte Füllstandsmessgeräte.

Nachteilig an solch einem Füllstandsmessgerät ist, dass die Mittenfrequenz der Sendesignale geändert werden muss, um die Abstrahlcharakteristik der Mikrowellenpulse der Sendesignale zu ändern. Das bedeutet die Sendesignale eines solchen Füllstandsmessgeräts sind breitbandig.

Füllstandsmessgeräte mit breitbandigen Sendesignalen sind nicht in der Lage den Abstand zwischen der Antenne und dem Füllgut fein aufzulösen und dadurch den Füllstand genauer zu bestimmen.

Der Erfindung liegt die Aufgabe zugrunde, eine Vorrichtung bereitzustellen, die den Füllstand eines Mediums in einem Behälter präzise bestimmen kann.

Die Aufgabe wird durch den Gegenstand der Erfindung gelöst. Der Gegenstand der Erfindung ist in dem unabhängigen Anspruch 1 spezifiziert.

Eine schwächere Bündelung wird durch eine zweite, optional zuschaltbare Mode erreicht, welche in der Überlagerung einer ersten Grundmode eine Auffächerung der Abstrahlkeule ergibt. Diese zweite Wellenmode kann durch eine kleine Steuerspannung MS zugeschaltet werden. Die Steuerspannung MS beträgt wenige Volt (z.B. 1...4 V) und die hierbei erforderliche Stromaufnahme liegt im Bereich Mikro-Ampere oder darunter.

Durch die Umschaltung zwischen schmaler und breiter Keule - insbesondere bei der Ausgestaltungsvariante mit einstellbarer Verbreiterung - lassen sich einige Störer in Bezug auf die Distanz identifizieren, indem diese bei schmaler Keule weniger stark oder gar nicht erscheinen als bei breiter Keule. Dies ist insbesondere bei Radarsystemen mit eher niedrigerer Betriebsfrequenz (z.B. 6 GHz oder 10 GHz) sinnvoll. Anwendung findet solch eine Umschaltung bei welligen Oberflächen, störenden Einbauten bei geringen Füllständen sowie bei Plausibilitätsberechnungen bei querliegenden zylinderförmigen Tanks, die starke Reflexionen erzeugen. Weiterhin wäre es möglich, durch eine breite Keule periodisch den kompletten Messbereich zu erfassen, und insbesondere mit einem FMCW-Radarsystem anschließend mit schmaler Keule nur den Distanz-Bereich, in welchem der Füllstand zu erwarten ist, exakter zu erfassen.

Gemäß einer vorteilhaften Weiterbildung ist der erste Hohlleiter mit mindestens einem ersten dielektrischen Material zumindest teilweise gefüllt und/oder der zweite Hohlleiter mit mindestens einem zweiten dielektrischen Material zumindest teilweise gefüllt. Dadurch können Hohlleiter mit kleineren Durchmessern verwendet werden. Zudem kann auf eine Schutzkappe am breiten Ende des Horns verzichtet werden, da die Einkopplung durch die Füllung abgedichtet wird.

Gemäß einer günstigen Weiterbildung weist das mindestens erste Material eine kleinere Dielektrizitätszahl auf als das mindestens zweite Material. Um mittels der erfindungsgemäßen Vorrichtung einen großen Bereich zu bestrahlen ist es vorteilhaft den Durchmesser des zweiten Hohlleiters grösser zu wählen als den Durchmesser des ersten Hohlleiters. Wird der zweite Hohlleiter mit einem dielektrischen Material gefüllt, so kann dieser kleiner dimensioniert werden. Dadurch kann der Durchmesser des ersten und zweiten Hohlleiters gleich gewählt werden, wodurch die Vorrichtung einfacher zu fertigen ist und das erste und zweite Koppelelement sich in einer gemeinsamen Ebene befinden. Auf diese Weise können das erste und zweite Koppelement auf Stegen einer einzigen Leiterkarte angeordnet sein, wodurch die Leiterkarte bis an die Antennenapparatur heranreicht.

Gemäß einer vorteilhaften Variante entspricht ein Verhältnis zwischen der mindestens zweiten Dielektrizitätszahl und der mindestens ersten Dielektrizitätszahl ca. 2,5. Hierdurch können die Durchmesser des ersten und zweiten Hohlleiters gleich gewählt werden, wobei sich die Differenz zwischen dem kleinstmöglichen Abstrahlwinkel und dem größtmöglichen Abstrahlwinkel vergrößern lässt.

Gemäß einer günstigen Variante entspricht ein Abstand A zwischen dem ersten und zweiten Koppelelement in einer Übertragungsrichtung der EM-Wellen $\frac{3}{4}\lambda + n \times \frac{\lambda}{2}$, bei dem $\lambda$ die Wellenlänge der EM-Wellen und n eine natürliche Zahl 0, 1, 2, ... ist. Hierdurch ergibt sich eine konstruktive Überlagerung der über das erste und zweite Koppelelement aus- oder eingekoppelten Wellen.

Gemäß einer vorteilhaften Ausführungsform beträgt eine Länge des ersten Koppelelements maximal $\lambda/4$ und eine Länge des zweiten Koppelelements maximal $\lambda/2$. Durch die angegebenen Obergrenzen der Längen des ersten und zweiten Koppelelements wird erreicht, dass in dem ersten Koppelelement möglichst nur eine Grundmode und in dem zweiten Koppelement eine Mode höherer Ordnung angeregt wird. Eine andere Dimensionierung des ersten und zweiten Koppelements ergäbe eine ungünstigere Reflexion an der ersten Stirnfläche des ersten Hohlleiters.

Gemäß einer günstigen Ausführungsform weist das erste Koppelelement einen ersten Anschluss zum Übertragen von EM-Wellen auf, die an das erste Koppelelement ausoder einkoppeln, wobei das zweite Koppelelement einen zweiten Anschluss zum Übertragen von EM-Wellen aufweist, die an das zweite Koppelelement aus- oder einkoppeln, wobei zwischen dem ersten und zweiten Anschluss ein Spannungsteiler, insbesondere ein kapazitiver Spannungsteiler vorgesehen ist, so dass der Spannungsteiler die Aufteilung der EM-Wellen zwischen dem ersten und zweiten Koppelelement bestimmt.

Gemäß einer vorteilhaften Ausgestaltung umfasst der Spannungsteiler eine elektrische Kapazität und einen Bandpassfilter. Die Aufteilung der elektrischen Leistung zwischen dem ersten Koppelelement und dem zweiten Koppelelement kann durch das Verhältnis der Impedanzen der zweiten Kapazität zu der Impedanz des Bandpassfilters eingestellt werden.

Gemäß einer günstigen Ausgestaltung umfasst der Spannungsteiler eine zweite Kapazität und ein Halbleiterelement, bevorzugt eine Diode, besonders bevorzugt eine Varaktordiode. Bei der Diode handelt es sich vorteilhaft um eine Kapazitätsdiode. Die Diode ist standardmäßig so aufgebaut, dass die elektrische Kapazität der Diode besonders ausgeprägt in Abhängigkeit der angelegten Sperrspannung verändert wird. Da das Verhältnis der zweiten Kapazität zu der Kapazität des Bandpassfilters die Aufteilung der Leistung zwischen dem ersten und zweiten Koppelelement festlegt, kann somit durch die Variation der Sperrspannung die Aufteilung der Leistung zwischen dem ersten und zweiten Koppelelement eingestellt werden. Die zweite Kapazität wirkt als Hochpass, d.h. sie stellt für die Sperrspannung eine Barriere dar, lässt jedoch Wellensignale passieren.

Gemäß einer günstigen Variante umfasst der Spannungsteiler eine zweite Kapazität und einen Schwingkreis. Anstelle eines Bandpassfilters kann auch ein Schwingkreis verwendet werden. Ein Schwingkreis zeichnet sich durch eine sehr starke Änderung der Amplitude über der Frequenz aus, falls die Frequenz im Bereich der Resonanzfrequenz gewählt wird. Hierdurch lässt sich mit einer kleinen Kapazitätsänderung - und somit einer kleinen maximalen Sperrspannung an einer Diode - eine große Variation der Aufteilung der Leistung zwischen dem ersten und zweiten Koppelement und somit Variation des Abstrahlwinkels der EM-Wellen erreichen. Um bei einer gleichen Spannungsänderung eine größere Kapazitätsänderung in der Diode zu bewirken, kann auch eine Diode mit stärkerer Dotierung verwendet werden.

Die Erfindung wird anhand der nachfolgenden Zeichnungen näher erläutert. Es zeigt:

Fig. 1: eine skizzierte Ansicht einer erfindungsgemäßen Vorrichtung 1 zum Aussenden und Empfangen von EM-Wellen, umfassend eine elektrische Schaltung zum Betreiben der Vorrichtung 1,

Fig. 2a - 2d: skizzierte Ansichten von Abstrahlungen von EM-Wellen einer Vorrichtung 1 entsprechend Fig. 1 bei verschiedenen Dimensionierungen der elektrischen Schaltung,

Fig. 3: eine skizzierte Ansicht einer weiteren Ausgestaltung der Vorrichtung 1, bei dem ein Spannungsteiler der elektrischen Schaltung kapazitiv ist, und

Fig. 4: eine skizzierte Ansicht einer weiteren Ausgestaltung der Vorrichtung 1, bei dem der Hornstrahler konisch ausgebildet ist.

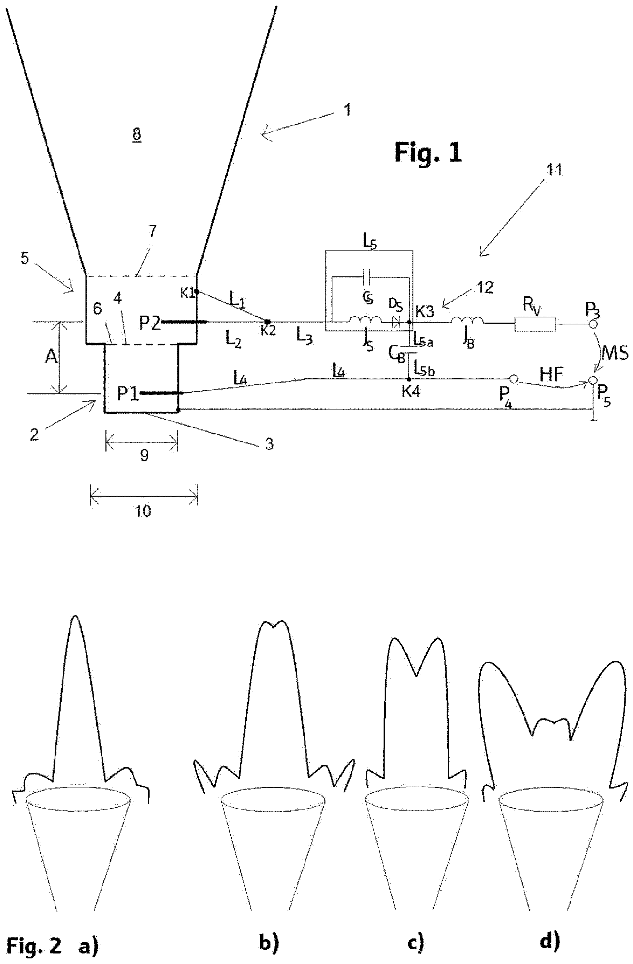

Fig. 1 zeigt eine erfindungsgemäße Vorrichtung 1 zum Aussenden und Empfangen von elektromagnetischen Wellen (EM-Wellen) zur Ermittlung und Überwachung eines Füllstands eines Mediums (nicht dargestellt) in einem Behälter (nicht dargestellt) mittels Laufzeiten der EM-Wellen. Die Vorrichtung 1 umfasst einen ersten Hohlleiter 2 mit einem ersten Koppelelement P1 zum Aus- und Einkoppeln von elektromagnetischen Wellen, wobei eine erste Stirnfläche 3 des ersten Hohlleiters 2 geschlossen und eine zweite Stirnfläche 4 des ersten Hohlleiters 2 geöffnet ist. Auf diese Weise können EM-Wellen, die über das erste Koppelelement P1 auskoppeln, über die zweite Stirnfläche ausgesendet werden und EM-Wellen, die über die zweite Stirnfläche des ersten Hohlleiters 4 empfangen werden an das erste Koppelelement P1 einkoppeln. Der erste Hohlleiter 2 ist zylinderförmig ausgestaltet und weist einen Durchmesser auf, der derart dimensioniert ist, dass nur eine Grundmode angeregt wird. Vorzugsweise handelt es sich bei der Grundmode um eine Mode mit einer sehr geringen Cut-Off-Frequenz, insbesondere eine TE01-Mode. Der erste Hohlleiter 2 kann jedoch auch eine elliptische, quadratische, n-eckförmige oder u-förmige Grundfläche aufweisen.

Weiterhin umfasst die Vorrichtung 1 einen zweiten Hohlleiter 5 mit einem zweiten Koppelelement P2 zum Aus- und Einkoppeln von EM-Wellen, wobei eine erste und zweite Stirnfläche 6, 7 des zweiten Hohlleiters 5 geöffnet sind. Dabei grenzt die erste Stirnfläche 6 des zweiten Hohlleiters 5 an die zweite Stirnfläche 4 des ersten Hohlleiters 2 an, so dass die von dem ersten Hohlleiter 2 ausgesendeten EM-Wellen von dem zweiten Hohlleiter 5 übertragen und die von dem zweiten Hohlleiter 5 übertragenen EM-Wellen von dem ersten Hohlleiter 2 empfangen werden. Der zweite Hohlleiter 5 kann zylinderförmig ausgestaltet sein. Der zweite Hohlleiter 5 kann eine Grundfläche aufweisen, die quadratisch, elliptisch, n-eckförmige oder u-förmig ausgestaltet ist. Der zweite Hohlleiter 5 ist derart dimensioniert, dass eine höhere Mode angeregt wird als die Mode in dem ersten Hohlleiter 2. Die höheren Moden können z. B. eine TM11-, TE21-, TE11- oder TM21-Mode sein.

Des Weiteren umfasst die Vorrichtung 1 einen aufgeweiteten Hornstrahler 8 zum Ausstrahlen, Empfangen und Fokussieren von EM-Wellen. Eine Eintrittsöffnung des Hornstrahlers 8 mündet in die zweite Stirnfläche 7 des zweiten Hohlleiters 5, so dass die von dem zweiten Hohlleiter 5 übertragenen EM-Wellen von dem Hornstrahler 8 ausgestrahlt und die von dem Hornstrahler 8 empfangenen EM-Wellen in den zweiten Hohlleiter 2 fokussiert werden.

Der erste Hohlleiter 2 ist dermaßen ausgestaltet, dass erste elektromagnetische Wellenmoden in dem ersten Hohlleiter 2 erzeugbar sind und der zweite Hohlleiter 5 ist dermaßen ausgestaltet, dass zweite elektromagnetische Wellenmoden in dem zweiten Hohlleiter 5 übertragbar sind.

Der erste und zweite Hohlleiter 2, 5 sind dermaßen dimensioniert, dass von dem ersten und zweiten Koppelelement P1, P2 ausgekoppelte EM-Wellen sich überlagern und gestreut und intensitätsschwach aus dem Hornstrahler 8 ausstrahlen bzw. gestreute und intensitätsschwache EM-Wellen, die von dem Hornstrahler 8 empfangen werden, an das erste und zweite Koppelelement P1, P2 ankoppeln. Lediglich von dem ersten Koppelelement P1 ausgekoppelte EM-Wellen, die fokussiert und intensitätsstark aus dem Hornstrahler 8 ausstrahlen bzw. fokussierte und intensitätsstarke EM-Wellen, die von dem Hornstrahler 8 empfangen werden, koppeln an das erste Koppelelement P1 an.

Ferner ist der erste Hohlleiter 2 mit einem ersten dielektrischen Material gefüllt und der zweite Hohlleiter 5 ist mit einem zweiten dielektrischen Material gefüllt. Das erste dielektrische Material kann aus Umgebungsluft bestehen. Alternativ kann der erste Hohlleiter evakuiert sein. Das zweite dielektrische Material weist eine Dielektrizitätszahl auf, die 2,5-mal größer ist als die Dielektrizitätszahl des ersten Materials.

Ein Abstand A zwischen dem ersten und zweiten Koppelelement P1, P2 entspricht in der Übertragungsrichtung der EM-Wellen $\frac{3}{4}\lambda + n \times \frac{\lambda}{2}$, wobei $\lambda$ die Wellenlänge der EM-Wellen und n eine natürliche Zahl 0, 1, 2, ... ist. Eine Länge des ersten Koppelelements P1 beträgt $\lambda/4$ und eine Länge des zweiten Koppelelements P2 beträgt $\lambda/2$.

Ferner umfasst die Vorrichtung 1 eine elektrische Schaltung 11 zum Betreiben der Vorrichtung 1. Die elektrische Schaltung 11 wird im Folgenden näher beschrieben. Von einem ersten Knotenpunkt K1 des zweiten Hohlleiters 5 führt eine erste elektrische Leitung L1 zu einem zweiten Knotenpunkt K2. Eine zweite Leitung L2 verbindet den zweiten Knotenpunkt K2 mit dem zweiten Koppelelement P2. Eine dritte Leitung L3 verbindet den zweiten Knotenpunkt K2 mit einer ersten Induktivität JS, wobei die erste Induktivität JS über eine Diode DS an einen dritten Knotenpunkt K3 verbunden ist. Eine erste Kapazität CS ist parallel zur ersten Induktivität JS und der Diode DS geschaltet. Die erste Kapazität CS und die erste Induktivität JS und die Diode DS bilden zusammen einen Bandpassfilter L5.

Der dritte Knotenpunkt K3 ist über eine zweite Induktivität JB und ein Vorwiderstand RV an einen ersten Anschluss P3 verbunden.

Eine vierte Leitung L4 verbindet das erste Koppelelement P1 mit einem vierten Knotenpunkt K4, wobei der vierte Knotenpunkt K4 an einen zweiten Anschluss P4 angeschlossen ist.

Über eine zweite Kapazität CB ist der dritte Knotenpunkt K3 mit dem vierten Knotenpunkt K4 verbunden.

Der Bandpassfilter L5 bildet mit der zweiten Kapazität CB einen kapazitiven Spannungsteiler 12. Durch die Dimensionierung der zweiten Kapazität CB kann eingestellt werden, welche Leistung an das erste und zweite Koppelelement P1, P2 übertragen wird. Aufgrund des grösseren Durchmessers des zweiten Hohlleiters 5, wird in dem Hohlleiter 5 eine höhere Mode angeregt als in dem ersten Hohlleiter 2. Die höhere Mode des zweiten Hohlleiters 5 wird am Ausgang der Hornantenne 8 zu einer breiten Keule ausgeweitet.

Der Bandpassfilter L5 wirkt als Bandsperre, wodurch keine Leistung an das zweite Koppelelement P2 gelangt. Der Vorwiderstand RV ist hochohmig, wodurch keine Leistung über den zweiten Anschluss P4 abfließen kann. Die Längen der ersten bis vierten Leitung L1 - L4 sind in der unteren Tabelle aufgeführt.

| Leitung / Distanz | Länge/Maße ($\lambda$ = Wellenlänge) | |
|---|---|---|
| A - Distanz zwischen dem ersten und zweiten Koppelelement | ¾ $\lambda$ + n * $\lambda$/2; | n = 0, 1, 2 ... |
| L1 - Erste Leitung Antennenhorn | n* $\lambda$/2 | n = 1, 2, 3 .... |
| L2 - Zweite Leitung | (n+1/2) * $\lambda$ | n = 0, 1,2 ... |
| L3 - Dritte Leitung | (n+1/2) * $\lambda$ | n = 0, 1, 2... |
| L4 - Vierte Leitung | n * $\lambda$ | n = 1, 2, 3 .... |
| Laufweg über den Bandpassfilter L5 | n * $\lambda$ / 2 | n = 1, 2, 3 .... |
| Länge der zweiten Kapazität CB | n * $\lambda$ / 2 | n = 1, 2, 3 .... |
| Länge des ersten Koppelelements | $\leq \lambda$ / 4 | |
| Länge des zweiten Koppelelements | $\leq \lambda$ / 4 oder $\leq$ $\lambda$ / 2 | |

Um fokussierte und intensitätsstarke EM-Wellen zu erzeugen wird ein Hochfrequenz-Signal HF an dem zweiten Anschluss P4 angelegt. Das Hochfrequenz-Signal HF wird über die vierte Leitung L4 an das erste Koppelelement P1 übertragen und über dem Hornstrahler 8 monomodig ausgestrahlt (nur eine Mode ist bei der Abstrahlung vorherrschend).

An dem ersten Anschluss P3 der Vorrichtung 1 wird eine Steuerspannung MS angelegt, die über den Vorwiderstand RV über die zweite Induktivität JB an die Kathode der Diode DS gelangt. Da eine Anode der Diode DS über die erste Induktivität JS und der ersten Leitung L1 mit dem zweiten Hohlleiter 5 verbunden ist, die wiederum mit dem dritten Anschluss P5 (Signalmassepotential) verbunden ist, wirkt die Steuerspannung MS an der Diode DS. Aufgrund der Sperrrichtung der Diode DS fliesst nur ein sehr geringer Strom durch die erste Leitung L1. Mit angelegter Spannung in Sperrrichtung wirkt die Diode DS wie eine Kapazität, wodurch der Bandpassfilter L5 die Durchlassfrequenz bei der Betriebsfrequenz der Vorrichtung 1 legt.

Fig. 2a zeigt die Abstrahlung von EM-Wellen, die lediglich von dem ersten Koppelelement P1 ausgekoppelt sind (Ein-Moden-Betrieb) und fokussiert und intensitätsstark aus dem Hornstrahler 8 ausstrahlen.

Fig. 2b, 2c, und 2d zeigen jeweils eine Abstrahlung von EM-Wellen, die sich bei der Überlagerung der aus dem ersten und zweiten Koppelelement P1, P2 ausgekoppelten EM-Wellen ergeben und von der Dimensionierung des Spanungsteilers (siehe Fig. 1 und Beschreibung zu Fig. 1) ergeben. Die Umschaltung zwischen der Abstrahlung entsprechend Fig. 2a und der Abstrahlung entsprechend Fig. 2b, 2c, 2d kann mittels einer analogen oder digitalen Steuerspannung MS erfolgen.

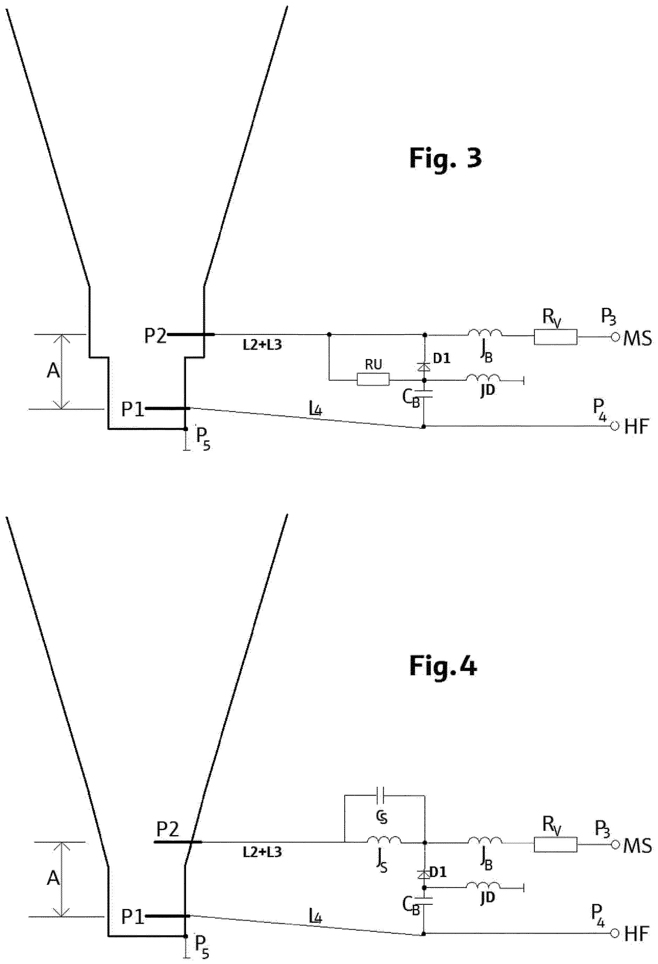

Fig. 3 zeigt eine weitere Ausgestaltungsvariante, bei dem der Spannungsteiler 12 kapazitiv ist und nur aus CB und D1 gebildet ist. Hierdurch lässt sich in Abhängigkeit von der Steuerspannung MS ein stufenloser Übergang von der Abstrahlung entsprechend Fig. 2a in Richtung der Abstrahlung entsprechend Fig. 2b - d erzeugen, wobei ohne anliegende Steuerspannung MS die Abstrahlung entsprechend Fig. 2a erreicht wird und mit zunehmender Steuerspannung MS die Abstrahlung in Richtung der Abstrahlung entsprechend Fig. 2d verändert wird. Da Diode D1 sehr hochohmig ist, und auch um eine schnelle Umschaltung von d) zurück nach a) zu ermöglichen, ist ein optionaler sehr hochohmiger (10... 100 MOhm oder mehr) Widerstand RU vorgesehen, durch welchen die mit der Diode D1 gebildete Kapazität (im Bereich bis wenige pF) entladen werden kann.

Fig. 4 zeigt eine weitere Ausgestaltungsvariante der erfindungsgemäßen Vorrichtung, die sich von der Vorrichtung entsprechend Fig. 3 durch eine vereinfachte elektrische Schaltung 11 unterscheidet. Anstatt einen Impedanz-Spannungsteiler aus Kapazität und Bandpassfiler oder Kapazität und Resonanzkreis zu bilden, wird der Impedanz-Spannungsteiler hier aus einer Diode D1 und der zweiten Kapazität CB gebildet. Die zweite Kapazität CB stellt eine Blockade für die Steuerspannung MS dar, die gleich der Sperrspannung der Diode D1 ist. Eine Induktivität JD verbindet die Diode D1 mit dem Signalmassenpotential am Anschluss P5. Eine erfindungsgemäße Vorrichtung mit einer elektrischen Schaltung 11 ist insgesamt kostengünstiger zu realisieren.

In allen Ausführungsbeispielen, die in den Figuren 1 bis 4 dargestellt sind wurde das Aussenden von EM-Wellen der Vorrichtung 1 beschrieben. Das Empfangen von EM-Wellen durch die Vorrichtung 1 läuft analog zum Aussenden der EM-Wellen ab.

**Bezugszeichenliste**

| | |
|---|---|
| 1 | Vorrichtung |
| 2 | Erster Hohlleiter |
| 3 | Erste Stirnfläche des ersten Hohlleiters |
| 4 | Zweite Stirnfläche des ersten Hohlleiters |
| 5 | Zweiter Hohlleiter |
| 6 | Erste Stirnfläche des zweiten Hohlleiters |
| 7 | Zweite Stirnfläche des zweiten Hohlleiters |
| 8 | Hornstrahler |
| 9 | Erster Durchmesser |
| 10 | Zweiter Durchmesser |
| 11 | Elektrische Schaltung |
| 12 | Spannungsteiler |
| A | Abstand |
| P1 | Erster Koppelelement |
| P2 | Zweiter Koppelelement |
| $\lambda$ | Wellenlänge der EM-Welle |
| $n$ | Natürliche Zahl 0, 1, 2, ... |
| P3 | Erster Anschluss |
| P4 | Zweiter Anschluss |
| P5 | Dritter Anschluss |
| DS | Diode |
| CS | Erste Kapazität |
| JS | Erste Induktivität |
| CB | Zweite Kapazität |
| JB | Zweite Induktivität |
| RV | Vorwiderstand |
| K1 | Erster Knotenpunkt |
| K2 | Zweiter Knotenpunkt |
| K3 | Dritter Knotenpunkt |
| K4 | Vierter Knotenpunkt |
| L1 | Erste Leitung |
| L2 | Zweite Leitung |
| L3 | Dritte Leitung |
| L4 | Vierte Leitung |
| L5 | Bandpassfilter |
| RU | Widerstand |
| JD | Induktivität |

**Patentansprüche**

**1.** Vorrichtung zum Aussenden und Empfangen von elektromagnetischen Wellen (EM-Wellen) zur Ermittlung und Überwachung eines Füllstands eines Mediums in einem Behälter mittels Laufzeiten der EM-Wellen, umfassend

- einen ersten Hohlleiter (2) mit
- einem ersten Koppelelement (P1), das zum Aus- und Einkoppeln der EM-Wellen mittels eines entsprechenden elektrischen Hochfrequenz-Signals (HF) beaufschlagbar ist,

wobei eine erste Stirnfläche (3) des ersten Hohlleiters (2) geschlossen und eine zweite Stirnfläche des ersten Hohlleiters (4) geöffnet ist, so dass EM-Wellen, die über das erste Koppelelement (P1) auskoppeln, über die zweite Stirnfläche ausgesendet werden und EM-Wellen, die über die zweite Stirnfläche des ersten Hohlleiters (4) empfangen werden, an das erste Koppelelement (P1) einkoppeln,

- mindestens einen zweiten Hohlleiter (5) mit
- einem zweiten Koppelelement (P2), das zum Aus- und Einkoppeln der EM-Wellen mittels des elektrischen Hochfrequenz-Signals (HF) beaufschlagbar ist,

wobei eine erste und zweite Stirnfläche (6, 7) des zweiten Hohlleiters (5) geöffnet sind, und wobei die erste Stirnfläche (6) des zweiten Hohlleiters (5) an die zweite Stirnfläche (4) des ersten Hohlleiters (2) angrenzt, so dass die von dem ersten Hohlleiter (2) ausgesendeten EM-Wellen von dem zweiten Hohlleiter (5) übertragen und die von dem zweiten Hohlleiter (5) übertragenen EM-Wellen von dem ersten Hohlleiter (2) empfangen werden,

- einen Hornstrahler (8) zum Ausstrahlen und Fokussieren von EM-Wellen, wobei eine Eintrittsöffnung (9) des Hornstrahlers (8) in die zweite Stirnfläche (7) des zweiten Hohlleiters (5) mündet, so dass die von dem zweiten Hohlleiter (5) übertragenen EM-Wellen von dem Hornstrahler (8) ausgestrahlt und die von dem Hornstrahler (8) empfangenen EM-Wellen in den zweiten Hohlleiter (2) fokussiert werden,

wobei der erste Hohlleiter (2) dermaßen ausgestaltet ist, dass die EM-Wellen in einer ersten elektromagnetischen Wellenmode in dem ersten Hohlleiter (2) erzeugbar sind,
**dadurch gekennzeichnet, dass**
der zweite Hohlleiter (5) ausgestaltet ist, um die EM-Wellen in einer höheren Wellenmode als der ersten Wellenmode zu erzeugen.

2. Vorrichtung nach Anspruch 1, wobei der erste Hohlleiter (2) mit mindestens einem ersten dielektrischen Material zumindest teilweise gefüllt ist und/oder der zweite Hohlleiter (5) mit mindestens einem zweiten dielektrischen Material zumindest teilweise gefüllt ist.

3. Vorrichtung nach Anspruch 2, wobei das mindestens erste Material eine kleinere Dielektrizitätszahl aufweist als das mindestens zweite Material.

4. Vorrichtung nach Anspruch 3, wobei ein Verhältnis zwischen der mindestens zweiten Dielektrizitätszahl und der mindestens ersten Dielektrizitätszahl ca. 2,5 entspricht.

5. Vorrichtung nach mindestens einem der vorhergehenden Ansprüche, wobei ein Abstand (A) zwischen dem ersten und zweiten Koppelelement in einer Übertragungsrichtung der EM-Wellen $\frac{3}{4}\lambda + n \times \frac{\lambda}{2}$ entspricht, bei dem $\lambda$ die Wellenlänge der EM-Wellen und n eine natürliche Zahl 0, 1, 2, ... ist.

6. Vorrichtung nach mindestens einem der vorhergehenden Ansprüche, wobei eine Länge des ersten Koppelelements (P1) maximal $\lambda$ / 4 und eine Länge des zweiten Koppelelements (P2) maximal $\lambda$/2 beträgt.

7. Vorrichtung nach mindestens einem der vorhergehenden Ansprüche, wobei das erste Koppelelement (P1) einen ersten Anschluss zum Übertragen von EM-Wellen aufweist, die an das erste Koppelelement (P1) aus- oder einkoppeln, wobei das zweite Koppelelement (P2) einen zweiten Anschluss zum Übertragen von EM-Wellen aufweist, die an das zweite Koppelelement (P2) aus- oder einkoppeln, wobei zwischen dem ersten und zweiten Anschluss ein Spannungsteiler, insbesondere ein kapazitiver Spannungsteiler vorgesehen ist, so dass der Spannungsteiler die Aufteilung der EM-Wellen zwischen dem ersten und zweiten Koppelelement (P1, P2) bestimmt.

8. Vorrichtung dem vorhergehenden Anspruch, wobei der Spannungsteiler eine elektrische Kapazität CB und einen Bandpassfilter umfasst.

9.  Vorrichtung nach mindestens einem der Ansprüche 1 bis 8, wobei der Spannungsteiler eine Kapazität CB und ein Halbleiterelement, bevorzugt eine Diode (D1), besonders bevorzugt eine Varaktordiode umfasst.

10. Vorrichtung nach mindestens einem der Ansprüche 1 bis 8, wobei der Spannungsteiler eine Kapazität CB und einen Schwingkreis umfasst.

**Claims**

1.  Apparatus designed to transmit and receive electromagnetic waves (EM waves) for the purpose of determining and monitoring a level of a medium in a vessel by means of the transit times of the EM waves, said apparatus comprising

    - a first waveguide (2) with
    - a first coupling element (P1) to which a corresponding electrical high-frequency signal (HF) can be applied for the purpose of coupling and decoupling the EM waves,

    wherein a first front face (3) of the first waveguide (2) is closed and a second front face (4) of the first waveguide (2) is open, such that the EM waves that decouple via the first coupling element (P1) are emitted via the second front face and the EM waves that are received via the second front face of the first waveguide (2) are coupled in at the first coupling element (P1),

    - at least a second waveguide (5) with
    - a second coupling element (P2) to which a corresponding electrical high-frequency signal (HF) can be applied for the purpose of coupling and decoupling the EM waves,

    wherein a first and second front face (6, 7) of the second waveguide (5) are open, and wherein the first front face (6) of the second waveguide (5) is adjacent to the second front face (4) of the first waveguide (2) such that the EM waves emitted by the first waveguide (2) are transmitted by the second waveguide (5) and the EM waves transmitted by the second waveguide (5) are received by the first waveguide (2),

    - a horn antenna (8) designed to emit and focus EM waves,
    wherein an entry opening (9) of the horn antenna (8) enters into the second front face (7) of the second waveguide (5), such that the EM waves transmitted by the second waveguide (5) are emitted by the horn antenna (8) and that the EM waves received by the horn antenna (8) are focused into the second waveguide (2),

    wherein the first waveguide (2) is designed in such a way that the EM waves can be generated in a first electromagnetic wave mode in the first waveguide (2),
    **characterized in that**
    the second waveguide (5) is designed to generate the EM waves in a higher wave mode than the first wave mode.

2.  Apparatus as claimed in Claim 1, wherein the first waveguide (2) is at least partially filled with at least a first dielectric material and/or the second waveguide (5) is at least partially filled with at least a second dielectric material.

3.  Apparatus as claimed in Claim 2, wherein the at least first material has a lower dielectric constant than the at least second material.

4.  Apparatus as claimed in Claim 3, wherein a ratio of the at least second dielectric constant to the at least first dielectric constant is around 2.5.

5.  Apparatus as claimed in at least one of the previous claims, wherein a distance (A) between the first and the second coupling element in a direction of transmission of the EM waves corresponds to $\frac{3}{4}\lambda + n \times \frac{\lambda}{2}$, where $\lambda$ is the wavelength of the EM waves and n is a natural number 0, 1, 2, ...

6.  Apparatus as claimed in at least one of the previous claims, wherein a length of the first coupling element (P1) is

at maximum $\lambda / 4$ and a length of the second coupling element (P2) is at maximum $\lambda / 2$.

7. Apparatus as claimed in at least one of the previous claims, wherein the first coupling element (P1) has a first connection for the transmission of EM waves which are coupled and decoupled at the first coupling element (P1), wherein the second coupling element (P2) has a second connection for the transmission of EM waves, which are coupled and decoupled at the second coupling element (P2), wherein a voltage divider, particularly a capacitive voltage divider, is provided between the first and the second connection such that the voltage divider determines the distribution of the EM waves between the first and the second coupling element (P1, P2).

8. Apparatus as claimed in the previous claim, wherein the voltage divider comprises an electrical capacitance CB and a bandpass filter.

9. Apparatus as claimed in at least one of the Claims 1 to 8, wherein the voltage divider comprises a capacitance CB and a semi-conductor element, preferably a diode (D1), particularly preferably a varicap diode.

10. Apparatus as claimed in at least one of the Claims 1 to 8, wherein the voltage divider comprises a capacitance CB and a resonant circuit.


**Revendications**

1. Dispositif destiné à l'émission et à la réception d'ondes électromagnétiques (ondes EM) en vue de la détermination et de la surveillance d'un niveau d'un produit dans un réservoir au moyen des temps de transit des ondes EM, lequel dispositif comprend

   - un premier guide d'ondes (2) avec
   - un premier élément de couplage (P1) auquel un signal électrique haute fréquence (HF) correspondant peut être appliqué pour le couplage et le découplage des ondes EM,

   dispositif pour lequel une première face frontale (3) du premier guide d'ondes (2) est fermée et une deuxième face frontale (4) du premier guide d'ondes (2) est ouverte, de sorte que les ondes EM qui sortent par le premier élément de couplage (P1) sont émises par la deuxième face frontale et les ondes EM qui sont reçues par la deuxième face frontale du premier guide d'ondes (2) sont couplées au premier élément de couplage (P1),

   - au moins un deuxième guide d'ondes (5) avec
   - un deuxième élément de couplage (P2) auquel un signal électrique haute fréquence (HF) correspondant peut être appliqué pour le couplage et le découplage des ondes EM,

   la première et la deuxième face frontale (6, 7) du deuxième guide d'ondes (5) étant ouvertes, et la première face frontale (6) du deuxième guide d'ondes (5) étant adjacente à la deuxième face frontale (4) du premier guide d'ondes (2) de sorte que les ondes EM émises par le premier guide d'ondes (2) sont transmises par le deuxième guide d'ondes (5) et les ondes EM transmises par le deuxième guide d'ondes (5) sont reçues par le premier guide d'ondes (2),

   - un cornet (8) destiné à rayonner et focaliser les ondes EM,
   une ouverture d'entrée (9) du cornet (8) débouchant dans la deuxième face frontale (7) du deuxième guide d'ondes (5), de sorte que les ondes EM transmises par le deuxième guide d'ondes (5) sont rayonnées par le cornet (8) et que les ondes EM reçues par le cornet (8) sont focalisées dans le deuxième guide d'ondes (2),

   le premier guide d'ondes (2) étant conçu de telle sorte que les ondes EM peuvent être générées dans un premier mode d'ondes électromagnétiques dans le premier guide d'ondes (2),
   **caractérisé en ce que**
   le deuxième guide d'ondes (5) est conçu pour générer les ondes EM dans un mode d'onde plus élevé que le premier mode d'onde.

2. Dispositif selon la revendication 1, pour lequel le premier guide d'ondes (2) est au moins partiellement rempli d'au moins un premier matériau diélectrique et/ou le deuxième guide d'ondes (5) est au moins partiellement rempli d'au moins un deuxième matériau diélectrique.

3. Dispositif selon la revendication 2, pour lequel l'au moins premier matériau présente une constante diélectrique inférieure à l'au moins deuxième matériau.

4. Dispositif selon la revendication 3, pour lequel un rapport entre l'au moins deuxième constante diélectrique et l'au moins première constante diélectrique est d'environ 2,5.

5. Dispositif selon au moins l'une des revendications précédentes, pour lequel une distance (A) entre le premier et le deuxième élément coupleur dans une direction de transmission des ondes EM correspond à $\frac{3}{4}\lambda + n \times \frac{\lambda}{2}$, où $\lambda$ est la longueur d'onde des ondes EM et $n$ un nombre naturel 0, 1, 2, ...

6. Dispositif selon au moins l'une des revendications précédentes, pour lequel une longueur du premier élément de couplage (P1) est au maximum de $\lambda$ / 4 et une longueur du deuxième élément de couplage (P2) est au maximum de $\lambda$ / 2.

7. Dispositif selon au moins l'une des revendications précédentes, pour lequel le premier élément de couplage (P1) présente une première connexion pour la transmission d'ondes EM qui sont couplées ou découplées au premier élément de couplage (P1), le deuxième élément de couplage (P2) présentant une deuxième connexion pour la transmission d'ondes EM, qui sont couplées ou découplées au deuxième élément de couplage (P2), un diviseur de tension, notamment un diviseur de tension capacitif, étant prévu entre la première et la deuxième connexion, de sorte que le diviseur de tension détermine la répartition des ondes EM entre le premier et le deuxième élément de couplage (P1, P2).

8. Dispositif selon la revendication précédente, pour lequel le diviseur de tension comprend une capacité électrique CB et un filtre passe-bande.

9. Dispositif selon au moins l'une des revendications 1 à 8, pour lequel le diviseur de tension comprend une capacité CB et un élément semi-conducteur, de préférence une diode (D1), particulièrement de préférence une diode varicap.

10. Dispositif selon au moins l'une des revendications 1 à 8, pour lequel le diviseur de tension comprend une capacité CB et un circuit résonant.

**Fig. 1**

$8$

$1$

$11$

$12$

$5$

$7$

$6$ $4$

$K1$

$L_1$

$L_5$

$C_S$ $D_S$ $K3$

$R_V$ $P_3$

P2

$L_2$ $K2$ $L_3$

$J_S$ $L_{5a}$

$C_B$ $L_{5b}$

$J_B$

MS

$A$

$L_4$ $L_4$

P1

$K4$ $P_4$ HF $P_5$

$2$

$3$

$9$

$10$

Fig. 2  a)          b)          c)          d)

**Fig. 3**

**Fig.4**

**EP 3 256 824 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012109101 A1
- US 2009289835 A1

- US 2012137768 A1